# EUROPEAN PATENT APPLICATION

(11) **EP 3 893 112 A2**
(43) Date of publication of application: **13.10.2021**
(21) Application number: 21170887.0
(22) Date of filing: 28.04.2021
(51) Int. Cl.: G06F 9/50, G06N 3/063

(54) **METHOD AND APPARATUS FOR SCHEDULING DEEP LEARNING REASONING ENGINES, DEVICE, AND MEDIUM**

(30) Priority: 12.06.2020 CN 202010537231
(71) Applicant: BEIJING BAIDU NETCOM SCIENCE AND TECHNOLOGY CO. LTD., 100085 Beijing (CN)
(72) Inventor: YANG, Hongtian, Beijing, 100085 (CN); HE, Shengyi, Beijing, 100085 (CN); WANG, Xuejun, Beijing, 100085 (CN)
(74) Representative: Maiwald Patent- und Rechtsanwaltsgesellschaft mbH

(57) **Abstract**

A method for scheduling deep learning reasoning engines is provided, which involve artificial intelligence, deep learning and chip technology. The specific implementation solution is: determining, in response to a scheduling request for a current reasoning task from an application layer, a type of the current reasoning task; calculating a total load of each of one or more reasoning engines after executing the current reasoning task of the type; comparing the total loads of the one or more reasoning engines to obtain a comparison result, and determining a target reasoning engine for executing the current reasoning task from the one or more reasoning engines according to the comparison result; returning an index of the target reasoning engine to the application layer, in which the index is used to indicate a call path of the target reasoning engine. Further, an apparatus for scheduling deep learning reasoning engines, an electronic device, a storage medium, a computer program product and a chip are provided.

## Description

### TECHNICAL FIELD

The present disclosure relates to a computer field, and in particular to artificial intelligence, deep learning and chip technology, and specifically to a method and apparatus for scheduling a deep learning reasoning engine, a device, and medium.

### BACKGROUND

With continuous development and maturity of deep learning technology, deep learning technology has been continuously applied to solve problems encountered in various industries and various scenarios, such as face recognition and so on. Among them, use of dedicated AI (Artificial Intelligence) chips to execute reasoning of deep learning model has gradually become prevailing.

Generally, just like a CPU, there may be many physical cores in an AI chip used to run the deep learning model, and there may also be multiple deep learning models running on the same one AI chip at the same time, and the running time of each deep learning model is different. Then, how to make full use of the computing power of all physical cores of the AI chip to improve system performance as much as possible has become a top priority.

### SUMMARY

Embodiments of the present disclosure provide a method and an apparatus for scheduling deep learning reasoning engines, a device, and a medium, to improve system performance.

In a first aspect, an embodiment of the present disclosure provides a method for scheduling deep learning reasoning engines, including: determining, in response to a scheduling request for a current reasoning task from an application layer, a type of the current reasoning task; calculating a total load of each of one or more reasoning engines after executing the current reasoning task of the type; comparing the total loads of the one or more reasoning engines to obtain a comparison result; determining a target reasoning engine for executing the current reasoning task from the one or more reasoning engines according to the comparison result; and returning an index of the target reasoning engine to the application layer, in which the index is used to indicate a call path of the target reasoning engine.

In an embodiment, calculating the total load of each of the one or more reasoning engines after executing the current reasoning task of the type comprises: acquiring a historical load of each reasoning engine and a load of each reasoning engine for executing a reasoning task of the type; calculating a sum of the historical load of each reasoning engine and the load of the reasoning engine for executing the reasoning task of the type, respectively; and taking the sum calculated for each reasoning engine as the total load of the reasoning engine after executing the current reasoning task of the type.

In an embodiment, the load of each reasoning engine for executing the reasoning task of the type comprises: a historical average load of the reasoning engine for executing the reasoning task of the type; or a load of the reasoning engine for executing the reasoning task of the type the last time.

In an embodiment, the method further comprises: receiving a load feedback message of each reasoning engine executing each reasoning task, wherein the load feedback message includes a type and a load for each reasoning task; and for each reasoning engine, saving the type of the reasoning task already executed by the reasoning engine and the load of the reasoning engine according to the load feedback message.

In an embodiment, determining the target reasoning engine for executing the current reasoning task from the one or more reasoning engines according to the comparison result comprises: taking the reasoning engine corresponding to the total load with a minimum value as the target reasoning engine for executing the current reasoning task.

In a second aspect, an embodiment of the present disclosure further provides an apparatus for scheduling deep learning reasoning engines, including: a type determining module configured to determine, in response to a scheduling request for a current reasoning task from an application layer, a type of the current reasoning task; a calculating module, configured to calculate a total load of each of one or more reasoning engines after executing the current reasoning task of the type; a comparing module, configured to compare the total loads of the one or more reasoning engines to obtain a comparison result, and determine a target reasoning engine for executing the current reasoning task from the one or more reasoning engines according to the comparison result; and a returning module, configured to return an index of the target reasoning engine to the application layer, in which the index is used to indicate a call path of the target reasoning engine.

In an embodiment, the calculating module comprises: an acquiring unit, configured to acquire a historical load of each reasoning engine and a load of each reasoning engine for executing a reasoning task of the type; a calculating unit, configured to calculate a sum of the historical load of each reasoning engine and the load of the reasoning engine for executing the reasoning task of the type respectively, and take the sum calculated for each reasoning engine as the total load of the reasoning engine after executing the current reasoning task of the type.

In an embodiment, the load of each reasoning engine for executing the reasoning task of the type comprises: a historical average load of the reasoning engine for executing the reasoning task of the type; or a load of the reasoning engine for executing the reasoning task of the type the last time.

In an embodiment, the apparatus further comprises: a saving module, configured to receive a load feedback message of each reasoning engine executing each reasoning task, wherein the load feedback message includes a type and a load for each reasoning task; wherein the saving module is further configured to, for each reasoning engine, save the type of the reasoning task already executed by the reasoning engine and the load of the reasoning engine according to the load feedback message.

In an embodiment, the comparing module is configured to: compare the total load of each reasoning engine, and take the reasoning engine corresponding to the total load with a minimum value as the target reasoning engine for executing the current reasoning task.

In a third aspect, an embodiment of the present disclosure further provides an electronic device, including: at least one processor; and a memory communicatively connected with the at least one processor. Instructions executable by the at least one processor are stored in the memory, and the instructions are executed by the at least one processor, to cause the at least one processor to execute the method for scheduling deep learning reasoning engines according to any embodiment of the present disclosure.

In a fourth aspect, an embodiment of the present disclosure further provides a non-transitory computer-readable storage medium, having computer instructions stored therein. The computer instructions are configured for causing a computer to execute the method for scheduling deep learning reasoning engines according to any embodiment of the present disclosure.

In a fifth aspect, an embodiment of the present disclosure provides an AI chip, including at least one reasoning engine, and further including: a scheduler, which is configured for executing the method for scheduling deep learning reasoning engines according to any embodiment of the present disclosure.

In a sixth aspect, an embodiment of the present disclosure provides a computer program product having a computer program. When the computer program is executed by a processor, the processor is caused to implement the method for scheduling deep learning reasoning engines according to any embodiment of the present disclosure.

According to the technical solution of embodiments of the present disclosure, by calculating the total load of each reasoning engine after executing the current reasoning task, the computing power of the respective reasoning engines executing the current reasoning task is measured, and the reasoning engines are allocated according to the actual computing power, thereby improving system performance. Moreover, when the reasoning engine is applied to face recognition, the speed and the execution efficiency of face recognition can be improved.

It is to be appreciated that the content described in this section is not intended to identify the key or important features of the embodiments of the present disclosure, nor is it intended to limit the scope of the present disclosure. Other features of the present disclosure will be easily appreciated through the following description. Other effects of the above-mentioned optional manners will be explained below in conjunction with specific embodiments.

### BRIEF DESCRIPTION OF THE DRAWINGS

The drawings will be used to better understand the present solution, and do not constitute a limitation to the present disclosure. In the drawings:
FIG. 1 is a flowchart of a method for scheduling deep learning reasoning engines according to a first embodiment of the present disclosure;
FIG. 2 is a flowchart of a method for scheduling deep learning reasoning engines according to a second embodiment of the present disclosure;
FIG. 3 is a schematic diagram of scheduling of deep learning reasoning tasks according to the second embodiment of the present disclosure;
FIG. 4 is a block diagram of an apparatus for scheduling deep learning reasoning engines according to a third embodiment of the present disclosure;
FIG. 5 is a block diagram of an electronic device used to implement the method for scheduling deep learning reasoning engines according to embodiments of the present disclosure.

### DETAILED DESCRIPTION

Exemplary embodiments of the present disclosure will be explained below in connection with the accompanying drawings, which include various details of embodiments of the present disclosure to facilitate understanding, and should be regarded as merely exemplary. Therefore, those of ordinary skill in the art should realize that various changes and modifications can be made to the embodiments described herein without departing from the scope and spirit of the present disclosure. Likewise, for clarity and conciseness, descriptions of well-known functions and structures will be omitted in the following description.

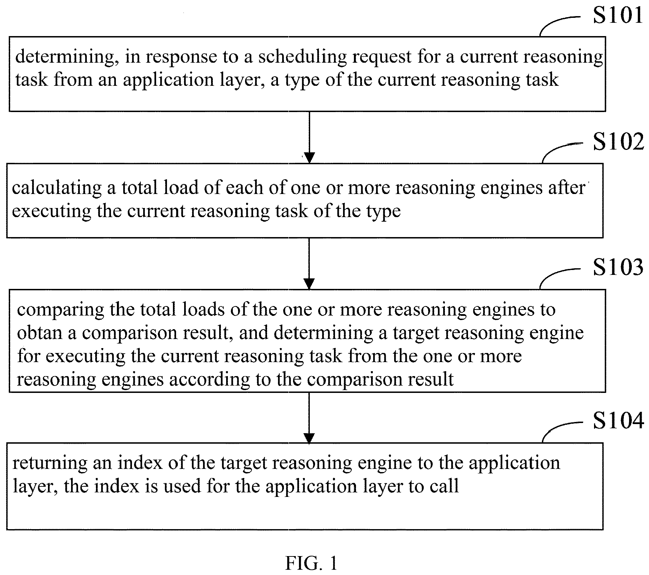

FIG. 1 is a flowchart of a method for scheduling deep learning reasoning engines according to a first embodiment of the present disclosure, the present embodiment is applicable to the case of scheduling the deep learning models according to the computing power of the reasoning engines, and relates to artificial intelligence, deep learning, and chip technology. The method can be executed by a device for scheduling deep learning reasoning engines, which is implemented by way of software and/or hardware, and is preferably configured in an electronic device, such as a computer device and so on. As shown in FIG. 1, the method includes the following:

At block S101, in response to a scheduling request for a current reasoning task from an application layer, a type of the current reasoning task is determined.

Just like a CPU, there may be many physical cores in an AI chip used to run a deep learning model, and there may also be multiple deep learning models running on the same one AI chip at the same time, and the running time of the deep learning models is distinct from each other. These deep learning models for example may be of types of face recognition models, living body detection models, and the like. Each forward reasoning of each type of deep learning model is referred as one forward reasoning task. An actual physical reasoning engine must be designated to run each forward reasoning task.

Usually, the application layer of the chip will submit deep learning reasoning tasks, wherein the scheduling request includes at least the type of each reasoning task. And in order to balance the computing power of all reasoning engines, to enable each reasoning engine to realize maximization of calculation examples, and to improve system performance, a scheduler will be inserted between the application layer and the submission of deep learning reasoning tasks to the reasoning engines according to embodiments of the present disclosure, and the scheduler automatically allocates and schedules reasoning engines for each deep learning reasoning task based on the condition of the load of each reasoning engine.

At block S102, a total load of each reasoning engine after executing the current reasoning task of the type is determined.

In order to make full use of the computing power of each reasoning engine and improve the performance of the system, and also with different running time of different types of deep learning models, thus in an embodiment of the present disclosure, the total load of each reasoning engine after executing the current reasoning task of the type will be calculated first, and scheduling will be performed according to the condition of the total load. Wherein the load can be characterized by execution time, that is to say, the total load represents the total time for a reasoning engine to execute all reasoning tasks, including historical tasks and current tasks. Then, when scheduling, a reasoning engine with the fastest total execution time can be selected to schedule the current reasoning task.

In addition, the method further includes: receiving a load feedback message of each reasoning engine executing each reasoning task, in which the load feedback message includes a type and a load for each reasoning task; and for each reasoning engine, saving the type of the reasoning task already executed by the reasoning engine and the load thereof according to the load feedback message.

Specifically, every time each reasoning engine completes one reasoning task, a condition of the load for executing the task and a type of the task will be fed back to the scheduler in a way of sending a load feedback message through a load feedback channel, and will be recorded and saved by the scheduler. Then, for the scheduling request of the current reasoning task received by the scheduler, the scheduler can count and calculate the total load of each reasoning engine after executing the current reasoning task of the type based on the saved information on load, or also can perform counting in real time and update the counting after each load feedback message is received, so that it can be used as the basis for scheduling next time.

At block S103, the total loads of the one or more reasoning engines are compared to obtain a comparison result, and a target reasoning engine for executing the current reasoning task is determined from the one or more reasoning engines according to the comparison result.

The condition of the total load of each reasoning engine represents the condition of the current computing power of each reasoning engine. The smallest value in the total load indicates the strongest computing power, that is, the fastest execution speed. Therefore, the reasoning engine with the smallest total load can be selected as the target reasoning engine.

At block S104, an index of the target reasoning engine is returned to the application layer. The index is used to indicate a call path of the reasoning engine.

After the target reasoning engine is determined, the index of the target reasoning engine will be returned to the application layer. And after the application layer calls the target reasoning engine according to the index, the current reasoning task will enter the task queue of the target reasoning engine in the driving layer and wait for execution.

It should be noted here that, in the prior art, reasoning engines are usually allocated randomly, or reasoning tasks are directly bound to the reasoning engines, which both does not make good use of the computing power of all engines, and easily causes the situation of some engines with problems of real-time performance while some engines are idle, and easily causes occurrence the problem of unbalanced load among different engines, and affects the performance of the system. However, in the technical solution of the embodiment of the present disclosure, scheduling is performed according to the respective current load status of each reasoning engine, which then can avoid the occurrence of this problem, thereby improving the performance of the system.

In the technical solution of embodiments of the present disclosure, by calculating the total load of each reasoning engine after executing the current reasoning task, the computing power of the respective reasoning engines executing the current reasoning task is measured, and the reasoning engines are allocated according to the actual computing power, thereby improving system performance. Moreover, when the reasoning engine is applied to face recognition, the speed and the execution efficiency of face recognition can be improved.

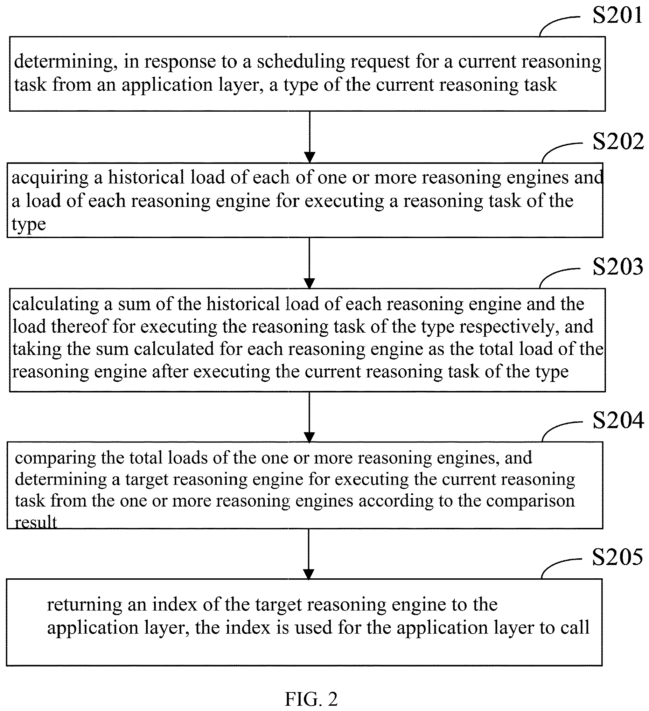

FIG. 2 is a flowchart of a method for scheduling deep learning reasoning engines according to a second embodiment of the present disclosure. In the present embodiment, optimization is performed on the basis of the foregoing embodiment. As shown in FIG. 2, the method specifically includes the following:

At block S201, in response to a scheduling request for a current reasoning task from an application layer, a type of the current reasoning task is determined.

At block S202, a historical load of each of one or more reasoning engines and a load of the reasoning engine for executing a reasoning task of the type are acquired.

At block S203, a sum of the historical load of each reasoning engine and the load thereof for executing the reasoning task of the type is calculated respectively, and the sum calculated for each reasoning engine is taken as the total load of the reasoning engine after executing the current reasoning task of the type.

In the present embodiment, the scheduler will receive a load feedback message for each reasoning engine executing each reasoning task, wherein the load feedback message includes the type and the load of the reasoning task; and save the type of the reasoning task having been executed by each reasoning engine and the load thereof according to the load feedback message. Then, for the scheduling request of the current reasoning task received by the scheduler, the scheduler can count and calculate the total load of each reasoning engine after executing the current reasoning task of the type based on the saved information on load, or also can perform counting in real time and update the counting after each load feedback message is received, so that it can be used as the basis for scheduling next time.

That is, the scheduler first calculates historical load of each reasoning engine, that is, the total execution time of historical reasoning tasks, based on the saved information, and then calculates historical average load of each reasoning engine for executing reasoning tasks of the type, or directly acquires load of each reasoning engine for executing the reasoning tasks of the type last time, and finally calculates the sum of the historical load of each reasoning engine and the load thereof for executing the reasoning tasks of the type respectively, and takes the sum as the total load of each reasoning engine after executing the current reasoning task of the type, and this total load indicates the total load of each reasoning engine after executing the current reasoning task of the type. And through the calculation of the total load, it can be used as a basis for scheduling to realize scheduling based on the current load condition of each reasoning engine, so that load balance can be achieved among different reasoning engines, and real-time performance and response speed of the system can be improved. In addition, based on the total load, resource utilization rate of the deep learning reasoning engines can also be calculated.

At block S204, the total loads of the one or more reasoning engines are compared, and a target reasoning engine for executing the current reasoning task is determined from the one or more reasoning engines according to the comparison result.

At block S205, an index of the target reasoning engine is returned to the application layer. The index is used to indicate a call path of the reasoning engine.

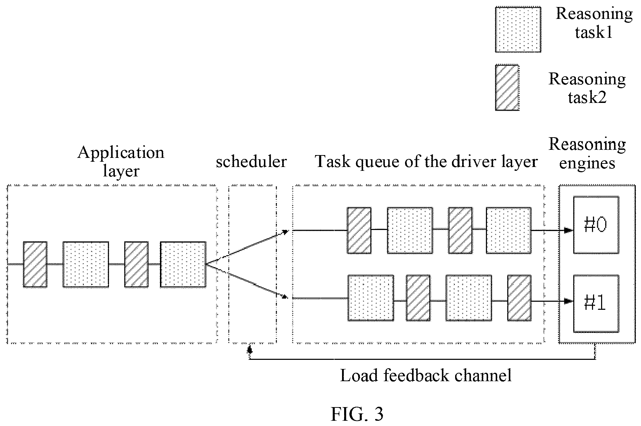

FIG. 3 is a schematic diagram of scheduling of deep learning reasoning tasks according to the second embodiment of the present disclosure. As shown in FIG. 3, between the application layer and the reasoning engines, a scheduler is added in the present embodiment of the application. The scheduler acquires the respective types of reasoning task 1 and reasoning task 2, and acquires the respective historical load of each reasoning engine #0 and #1 for executing the reasoning task of each type through a load feedback channel, and calculates the total load of each reasoning engine after executing the reasoning task of the current type according to the historical load. For example, for the reasoning engines #0 and #1, it is calculated respectively that the total loads F0 and F1 thereof after executing the current reasoning task, and F0 > F1, which indicates that the reasoning engine #1 corresponding to F1 has the largest computing power, and then the current reasoning task will be scheduled to the reasoning Engine #1. The scheduled reasoning task then enters the task queue of the driver layer and is queued for execution.

According to the technical solution of the embodiments of the present disclosure, by calculating the total load of each reasoning engine after executing the current reasoning task, the computing power of the respective reasoning engines executing the current reasoning task is measured, and the reasoning engines are allocated according to the actual computing power, which enables load balance to be achieved among different reasoning engines, and improves the real-time performance and the response speed of the system. Moreover, when the reasoning engine is applied to face recognition, the speed and the execution efficiency of face recognition can be improved.

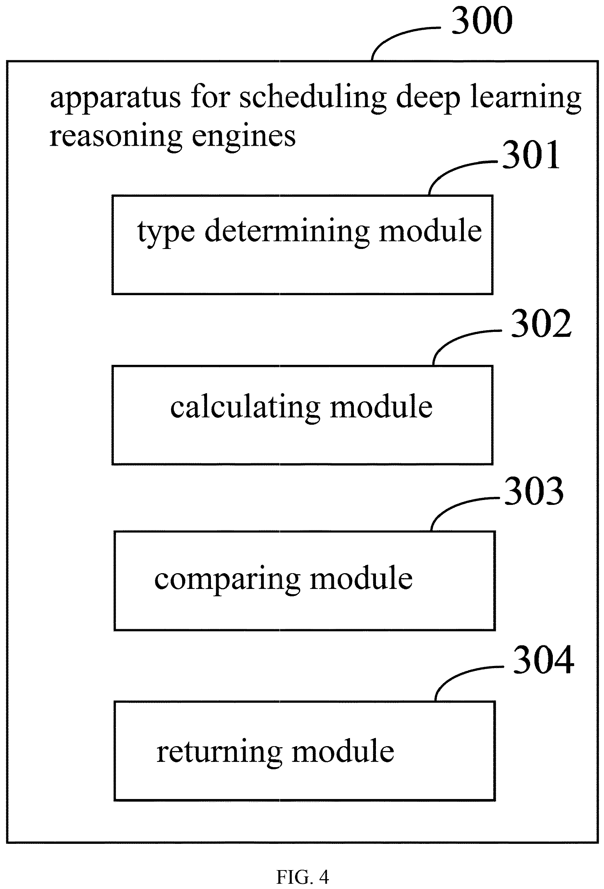

FIG. 4 is a block diagram of an apparatus for scheduling deep learning reasoning engines according to a third embodiment of the present disclosure, the present embodiment is applicable to the case of scheduling the deep learning models according to the computing power of the reasoning engines, and relates to artificial intelligence, deep learning, and chip technology. The method for scheduling deep learning reasoning engines according to any embodiment of the present disclosure can be implemented by this apparatus. As shown in FIG. 4, the apparatus 300 includes a type determining module 301, a calculating module 302, a comparing module 303 and a returning module 304.

The type determining module 301 is configured to determine, in response to a scheduling request for a current reasoning task from an application layer, a type of the current reasoning task.

The calculating module 302 is configured to calculate a total load of each of one or more reasoning engines after executing the current reasoning task of the type.

The comparing module 303 is configured to compare the total load of each reasoning engine to obtain a comparison result, and determine a target reasoning engine for executing the current reasoning task from the one or more reasoning engines according to the comparison result.

The returning module 304 is configured to return an index of the target reasoning engine to the application layer. The index is used to indicate a call path of the reasoning engine.

Optionally, the calculating module includes: an acquiring unit for acquiring a historical load of each reasoning engine and a load of each reasoning engine for executing a reasoning task of the type; and a calculating unit for calculating a sum of the historical load of each reasoning engine and the load thereof for executing the reasoning task of the type respectively, and taking the sum calculated for each reasoning engine as the total load of the reasoning engine after executing the current reasoning task of the type.

Optionally, the load of each reasoning engine for executing the reasoning task of the type includes: a historical average load of the reasoning engine for executing the reasoning task of the type; or a load of the reasoning engine for executing the reasoning task of the type the last time.

Optionally, the apparatus further includes: a saving module for receiving a load feedback message of each reasoning engine executing each reasoning task, in which the load feedback message includes a type and a load for each reasoning task; for each reasoning engine, saving the type of the reasoning task already executed by the reasoning engine and the load of the reasoning engine according to the load feedback message.

Optionally, the comparing module is configured for: comparing the total load of each reasoning engine, and taking the reasoning engine corresponding to the total load with a minimum value as the target reasoning engine for executing the current reasoning task.

The apparatus 300 for scheduling deep learning reasoning engines provided by the embodiment of the present disclosure can execute the method for scheduling deep learning reasoning engines provided by any embodiment of the present disclosure, and has functional modules and beneficial effects corresponding to those for execution of the method. For content not described in detail in the present embodiment, reference may be made to the description in any method embodiment of the present disclosure.

According to an embodiment of the present disclosure, the present disclosure also provides an AI chip, including at least one reasoning engine, and a scheduler for executing the method for scheduling deep learning reasoning engines as described in any of the above embodiments.

In the AI chip of the embodiment of the present disclosure, since a scheduler is inserted between the application layer and the submission of deep learning reasoning tasks to the reasoning engines, automatic allocation and scheduling of the reasoning engines for each deep learning reasoning task in dependence on the condition of the load of each reasoning engine is realized, so that the performance of system is improved. When the AI chip is used for face recognition tasks, because the reasoning engines are allocated and scheduled reasonably by the scheduler and the performance is improved, the processing efficiency of the AI chip is also greatly improved, and then speed and execution efficiency of face recognition is increased, and face recognition results can be quickly given, which reduces the waiting time for users.

According to embodiments of the present disclosure, the present disclosure also provides an electronic device and a readable storage medium.

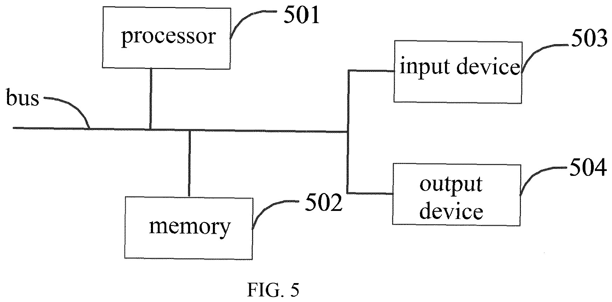

As shown in FIG. 5, it is a block diagram of an electronic device for method for scheduling deep learning reasoning engines according to an embodiment of the present disclosure. The electronic device are intended to represent various forms of digital computers, such as laptop computers, desktop computers, workbenches, personal digital assistants, servers, blade servers, mainframe computers, and other suitable computers. Electronic device may also represent various forms of mobile devices, such as personal digital assistants, cellular phones, intelligent phones, wearable devices, and other similar computing devices. The components shown herein, their connections and relations, and their functions are merely examples, and are not intended to limit the implementation of the present disclosure described and/or required herein.

As shown in FIG. 5, the electronic device includes: one or more processors 501, a memory 502, and interfaces for connecting various components which include a high-speed interface and a low-speed interface. The various components are interconnected using different buses and can be mounted on a common motherboard or otherwise installed as required. The processor may process instructions executed within the electronic device, which include instructions stored in or on a memory to display graphic information of a graphical user interface (GUI) on an external input/output device (such as a display device coupled to the interface). In other embodiments, multiple processors and/or multiple buses can be used with multiple memories, if desired. Similarly, multiple electronic devices can be connected, each providing some of the necessary operations (for example, as a server array, a group of blade servers, or a multiprocessor system). One processor 501 is exemplified in FIG. 5.

The memory 502 is a non-transitory computer-readable storage medium provided by the present disclosure. The memory stores instructions executable by at least one processor, so as to enable the at least one processor to execute the method for scheduling deep learning reasoning engines provided by the present disclosure. The non-transitory computer-readable storage medium of the present disclosure stores computer instructions, which are used to cause a computer to execute the method for scheduling deep learning reasoning engines provided by the present disclosure.

As a non-transitory computer-readable storage medium, the memory 502 can be used to store non-transitory software programs, non-transitory computer executable programs, and modules, such as program instructions/modules/units corresponding to the method for scheduling deep learning reasoning engines in the embodiments of the present disclosure (for example, the type determining module 301, the calculating module 302, the comparing module 303, and the returning module 304 as shown in FIG. 4). The processor 501 executes various functional applications and data processing of the server by running non-transitory software programs, instructions, and modules stored in the memory 502, that is, implements the method for scheduling deep learning reasoning engines in the above described method embodiments.

The memory 502 may include a storage program area and a storage data area, wherein the storage program area can store an operating system and an application program required for at least one function; and the storage data area can store data created according to the use of the electronic device used for implementing the method for scheduling deep learning reasoning engines, etc. In addition, the memory 502 may include a high-speed random access memory, and may also include a non-transitory memory, such as at least one magnetic disk storage device, a flash memory device, or other non-transitory solid-state storage device. In some embodiments, the memory 502 may optionally include memories remotely provided relative to the processor 501, and these remote memories may be connected to the electronic device used for implementing the method for scheduling deep learning reasoning engines via a network. Examples of the above network include, but are not limited to, the Internet, an intranet, a local area network, a mobile communication network, and combinations thereof.

The electronic device used for implementing the method for scheduling deep learning reasoning engines may further include an input device 503 and an output device 504. The processor 501, the memory 502, the input device 503, and the output device 504 may be connected through a bus or in other manners. In FIG. 5, the connection through the bus is exemplified.

The input device 503 can receive inputted numeric or character information, and generate key signal inputs related to user settings and function control of the electronic device used for implementing the method for scheduling deep learning reasoning engines of the embodiments of the present disclosure, such as a touch screen, a keypad, a mouse, a track pad, a touchpad, a pointing stick, one or more mouse buttons, a trackball, a joystick and other input devices. The output device 504 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of systems and technologies described herein can be implemented in digital electronic circuit systems, integrated circuit systems, application specific integrated circuits (ASICs), computer hardwares, firmwares, softwares, and/or combinations thereof. These various embodiments may include: implementation in one or more computer programs executable on and/or interpretable on a programmable system including at least one programmable processor, which may be a dedicated or general-purpose programmable processor that may receive data and instructions from a storage system, at least one input device, and at least one output device, and transmit data and instructions to the storage system, the at least one input device, and the at least one output device.

These computing programs (also referred to as programs, software, software applications, or codes) include machine instructions of a programmable processor and can be implemented using high-level procedures and/or object-oriented programming languages, and/or assembly/machine languages. As used herein, the terms "machine-readable medium" and "computer-readable medium" refer to any computer program product, device, and/or apparatus used to provide machine instructions and/or data to a programmable processor (for example, magnetic disks, optical disks, memories, and programmable logic devices (PLDs)), including machine-readable medium that receives machine instructions as machine-readable signals. The term "machine-readable signal" refers to any signal used to provide machine instructions and/or data to a programmable processor.

In order to provide interaction with the user, the systems and techniques described herein may be implemented on a computer having a display device (for example, a Cathode Ray Tube (CRT) or Liquid Crystal Display (LCD) monitor) for displaying information to the user; and a keyboard and pointing device (such as a mouse or trackball) through which the user can provide input into a computer. Other kinds of apparatuses may also be used to provide interaction with the user. For example, the feedback provided to the user may be any form of sensory feedback (for example, visual feedback, auditory feedback, or haptic feedback); and input from the user may be received in any form (including acoustic input, voice input, or tactile input).

The systems and technologies described herein can be implemented in a computing system including background components (for example, as a data server), a computing system including middleware components (for example, an application server), or a computing system including front-end components (for example, a user computer with a graphical user interface or a web browser, through which the user can interact with the implementation of the systems and technologies described herein), or a computer system including any combination of such background components, middleware components, and front-end components. The components of the system may be interconnected by any form or medium of digital data communication (such as, a communication network). Examples of communication networks include: a local area network (LAN), a wide area network (WAN), the Internet, and blockchain network.

The computer system may include clients and servers. The client and server are generally remote from each other and typically interact through a communication network. The client-server relation is generated by computer programs running on the respective computers and having a client-server relation with each other.

According to the technical solution of the embodiments of the present disclosure, by calculating the total load of each reasoning engine after executing the current reasoning task, the computing power of the respective reasoning engines executing the current reasoning task is measured, and the reasoning engines are allocated according to the actual computing power, which enables load balance to be achieved among different reasoning engines, and improves the real-time performance and the response speed of the system, thereby improving the performance of the system. Moreover, when the reasoning engine is applied to face recognition, the speed and the execution efficiency of face recognition can be improved.

It should be understood that the various forms of flows shown above can be used to reorder, add, or delete steps. For example, the steps disclosed in the present disclosure can be executed in parallel, sequentially, or in different orders. As long as the desired results of the technical solutions disclosed in the present disclosure can be achieved, there is no limitation herein.

The foregoing specific embodiments do not constitute a limitation on the protection scope of the present disclosure. It should be understood by those skilled in the art that various modifications, combinations, sub-combinations, and substitutions may be made according to design requirements and other factors.

## Claims

1. A method for scheduling deep learning reasoning engines, comprising:
determining (S101, S201), in response to a scheduling request for a current reasoning task from an application layer, a type of the current reasoning task;
calculating (S 102) a total load of each of one or more reasoning engines after executing the current reasoning task of the type;
comparing (S103, S204) the total loads of the one or more reasoning engines to obtain a comparison result, and determining a target reasoning engine for executing the current reasoning task from the one or more reasoning engines according to the comparison result; and
returning (S104, S205) an index of the target reasoning engine to the application layer, wherein the index is used to indicate a call path of the target reasoning engine.

2. The method according to claim 1, wherein calculating (S102) the total load of each of the one or more reasoning engines after executing the current reasoning task of the type comprises:
acquiring (S202) a historical load of each reasoning engine and a load of each reasoning engine for executing a reasoning task of the type;
calculating (S203) a sum of the historical load of each reasoning engine and the load of the reasoning engine for executing the reasoning task of the type, respectively; and taking the sum calculated for each reasoning engine as the total load of the reasoning engine after executing the current reasoning task of the type.

3. The method according to claim 2, wherein the load of each reasoning engine for executing the reasoning task of the type comprises:
a historical average load of the reasoning engine for executing the reasoning task of the type; or
a load of the reasoning engine for executing the reasoning task of the type the last time.

4. The method according to any one of claims 1-3, further comprising:
receiving a load feedback message of each reasoning engine executing each reasoning task, wherein the load feedback message includes a type and a load for each reasoning task; and
for each reasoning engine, saving the type of the reasoning task already executed by the reasoning engine and the load of the reasoning engine according to the load feedback message.

5. The method according to any of claims 1-4, wherein determining (S103, S204) the target reasoning engine for executing the current reasoning task from the one or more reasoning engines according to the comparison result comprises:
taking the reasoning engine corresponding to the total load with a minimum value as the target reasoning engine for executing the current reasoning task.

6. An apparatus (300) for scheduling deep learning reasoning engines, comprising:
a type determining module (301), configured to determine, in response to a scheduling request for a current reasoning task from an application layer, a type of the current reasoning task;
a calculating module (302), configured to calculate a total load of each of one or more reasoning engines after executing the current reasoning task of the type;
a comparing module (303), configured to compare the total loads of the one or more reasoning engines to obtain a comparison result, and determine a target reasoning engine for executing the current reasoning task from the one or more reasoning engines according to the comparison result; and
a returning module (304), configured to return an index of the target reasoning engine to the application layer, wherein the index is used to indicate a call path of the target reasoning engine.

7. The apparatus according to claim 6, wherein the calculating module (302) comprises:
an acquiring unit, configured to acquire a historical load of each reasoning engine and a load of each reasoning engine for executing a reasoning task of the type;
a calculating unit, configured to calculate a sum of the historical load of each reasoning engine and the load of the reasoning engine for executing the reasoning task of the type respectively, and take the sum calculated for each reasoning engine as the total load of the reasoning engine after executing the current reasoning task of the type.

8. The apparatus according to claim 7, wherein the load of each reasoning engine for executing the reasoning task of the type comprises:
a historical average load of the reasoning engine for executing the reasoning task of the type; or
a load of the reasoning engine for executing the reasoning task of the type the last time.

9. The apparatus according to any one of claims 6-8, further comprising:
a saving module, configured to receive a load feedback message of each reasoning engine executing each reasoning task, wherein the load feedback message includes a type and a load for each reasoning task;
wherein the saving module is further configured to, for each reasoning engine, save the type of the reasoning task already executed by the reasoning engine and the load of the reasoning engine according to the load feedback message.

10. The apparatus according to any of claims 6-9, wherein the comparing module (303) is configured to:
compare the total load of each reasoning engine, and take the reasoning engine corresponding to the total load with a minimum value as the target reasoning engine for executing the current reasoning task.

11. An electronic device, comprising:
at least one processor; and
a memory communicatively connected with the at least one processor;
wherein instructions executable by the at least one processor are stored in the memory, and the instructions are executed by the at least one processor, to cause the at least one processor to execute the method for scheduling deep learning reasoning engines according to any one of claims 1-5.

12. A non-transitory computer-readable storage medium, having computer instructions stored therein, wherein the computer instructions are configured for causing a computer to execute the method for scheduling deep learning reasoning engines according to any one of claims 1-5.

13. A computer program product, comprising a computer program, wherein when the computer program is executed by a processor, the processor is caused to implement the method according to any one of claims 1-5.

14. An AI chip, comprising at least one reasoning engine, and further comprising:
a scheduler, configured to execute the method for scheduling deep learning reasoning engines according to any one of claims 1-5.
